# DEMANDE DE BREVET EUROPEEN

(11) **EP 4 685 379 A1**
(43) Date de publication de la demande: **28.01.2026**
(21) Numéro de dépôt: 25191336.4
(22) Date de dépôt: 23.07.2025
(51) Int. Cl.: F16L 37/23, F16L 37/34

(54) **ELÉMENT ET ENSEMBLE DE RACCORD FLUIDIQUE**

(30) Priorité: 24.07.2024 FR 2408169
(71) Demandeur: Staubli Faverges, 74210 Faverges-Seythenex (FR)
(72) Inventeur: MARQUES BARROCA, Serafim, 73200 ALBERTVILLE (FR); DURIEUX, Christophe, 73200 GILLY SUR ISERE (FR)
(74) Mandataire: Lavoix

(57) **Abrégé**

Elément de raccord fluidique (1), comprenant : un corps (10) ; une bille de verrouillage (25) ; une bague de verrouillage (30), mobile entre une position de blocage, bloquant la bille de verrouillage (25) dans une position de verrouillage, et une position de libération, libérant la bille de verrouillage (25) ; une bille d'actionnement (27), pour entraîner la bague de verrouillage (30) jusqu'à la position de libération au cours de l'accouplement ; et une bague de manœuvre (50), montée autour de la bague de verrouillage (30) et comprenant une paroi radiale interne (52), radialement en regard de la partie annulaire avant (14) et dont le diamètre est inférieur au diamètre d'un cylindre (C52) coaxial avec le corps et comprenant ladite bille d'actionnement (27), la bague de verrouillage (30) comprenant un talon radial (32) pour être entrainée par la bague de manœuvre (50).

## Description

La présente invention concerne un élément de raccord fluidique et un ensemble de raccord fluidique comprenant un tel élément de raccord fluidique.

FR2992048A1 décrit un élément de raccord fluidique comportant un corps, une bague de verrouillage, des billes d'actionnement et des billes verrouillage. La bague de verrouillage permet de verrouiller et déverrouiller un élément de raccord fluidique complémentaire accouplé avec l'élément de raccord fluidique, par l'intermédiaire des billes de verrouillage, radialement mobiles par rapport au corps. La bague de verrouillage fait également office de bague de manoeuvre, grâce aux billes d'actionnement, qui sont mobiles dans un logement allongé du corps. L'accouplement de l'élément de raccord complémentaire avec l'élément de raccord fluidique débute avec l'insertion d'une collerette de l'élément de raccord complémentaire dans l'élément de raccord fluidique. Cette collerette entre en contact avec les billes d'actionnement et provoque leur déplacement vers l'arrière du logement allongé, les billes d'actionnement entraînant alors la bague de verrouillage vers l'arrière. La bague de verrouillage ménage un espace radial de dégagement, qui, lorsque la bague est ainsi reculée, permet aux billes de verrouillage d'être radialement déplacées d'une position de verrouillage à une position de libération, autorisant ainsi l'introduction de l'élément de raccord complémentaire, notamment de sa collerette.

Toutefois, pour certaines applications sévères, des pollutions sont susceptibles de s'insérer entre la bague de verrouillage et la surface extérieure du corps, particulièrement au recul de la bague de verrouillage. Ce phénomène peut causer, à plus ou moins long terme, des difficultés pour le déplacement des billes de verrouillage et des billes d'actionnement et limiter le coulissement de la bague de verrouillage. Egalement, il est difficile de choisir un même matériau pour la bague de verrouillage, qui convienne non seulement pour les parties fonctionnelles internes interagissant avec les billes et le corps pour le verrouillage et pour l'enveloppe externe qui doit être rendue manoeuvrable par l'utilisateur.

Le but de l'invention est alors de proposer un nouvel élément de raccord fluidique qui permet, sans augmenter l'effort nécessaire pour l'accouplement, de faciliter le choix de matériau et de réduire le risque d'introduction de pollutions.

A cet effet, l'invention a pour objet un élément de raccord fluidique, configuré pour être accouplé avec un élément de raccord fluidique complémentaire, l'élément de raccord fluidique comprenant :
- un corps, coaxial avec un axe central et dans lequel est emmanché l'élément de raccord fluidique complémentaire au cours de l'accouplement ;
- au moins une bille de verrouillage, mobile par rapport au corps, radialement par rapport à l'axe central, entre :
   - une position de verrouillage, dans laquelle ladite au moins une bille de verrouillage est apte à verrouiller l'élément de raccord fluidique complémentaire emmanché dans le corps, et
   - une position de déverrouillage, dans laquelle ladite au moins une bille de verrouillage ne s'oppose pas au retrait de l'élément de raccord fluidique complémentaire ;
- une bague de verrouillage, mobile par rapport au corps suivant l'axe central entre :
   - une position de blocage, dans laquelle ladite au moins une bille de verrouillage est bloquée dans la position de verrouillage,
   - une position de libération, dans laquelle ladite au moins une bille de verrouillage est libre d'être déplacée jusqu'à la position de déverrouillage ;
- au moins une bille d'actionnement, reçue dans un logement allongé du corps et configurée pour être repoussée par l'élément de raccord fluidique complémentaire le long du logement allongé, au cours de l'accouplement avec l'élément de raccord fluidique complémentaire, de sorte à entraîner axialement la bague de verrouillage depuis la position de blocage jusqu'à la position de libération, le diamètre de ladite au moins une bille d'actionnement étant supérieur au diamètre de ladite au moins une bille de verrouillage, ladite au moins une bille d ' actionnement dépassant radialement à l'extérieur d'une partie annulaire avant appartenant au corps ;
- des moyens de rappel, pour rappeler la bague de verrouillage vers la position de blocage.

Selon l'invention :
- l'élément de raccord comprend une bague de manoeuvre, mobile par rapport au corps suivant l'axe central, montée autour de la bague de verrouillage et comprenant une paroi radiale interne, radialement en regard de la partie annulaire avant du corps à l'avant du logement allongé, et dont le diamètre est inférieur au diamètre d'un cylindre coaxial avec l'axe central et comprenant ladite au moins une bille d'actionnement ; et
- la bague de verrouillage comprend un talon radial, pour être entrainée de la position de blocage vers la position de libération par la bague de manoeuvre.

Une idée à la base de l'invention est de prévoir distinctement la bague de verrouillage et la bague de manoeuvre plutôt qu'une unique bague de verrouillage comme le prévoit l'art antérieur. Cela donne la possibilité pour la bague de manœuvre d'avoir la paroi interne cylindrique avec un diamètre particulièrement étroit, qui limite le risque d'introduction de pollutions. L'unique bague de l'art antérieur, assurant à la fois le verrouillage et la manœuvre, n'aurait pas pu facilement comporter une telle paroi interne cylindrique sans générer des difficultés pour la fabrication et l'assemblage de l'élément de raccord. Le fait de prévoir des bagues de verrouillage et de manœuvre distinctes permet aussi avantageusement la mise en œuvre de deux matériaux différents. Avantageusement, la bague de manœuvre peut être réalisée dans un matériau adapté à la manœuvre par l'utilisateur et la bague de verrouillage peut être réalisée dans un matériau adapté à l'interaction avec le corps et les billes de verrouillage et d'actionnement. Par ailleurs, ladite au moins une bille d'actionnement et le logement allongé correspondant permettent de limiter l'effort nécessaire pour l'accouplement.

Suivant d'autres aspects avantageux de l'invention, l'invention comprend une ou plusieurs des caractéristiques suivantes, prises isolément ou suivant toutes les combinaisons techniquement possibles :
- La bague de manœuvre comprend une paroi interne médiane, recevant la bague de verrouillage et située en arrière de la paroi radiale interne, et une paroi interne arrière, s'étendant le long de l'axe central entre la paroi interne médiane et une extrémité arrière de la bague de manœuvre et dont le diamètre est strictement supérieur au diamètre extérieur du talon radial.
- La bague de manœuvre comprend une gorge interne cylindrique, agencée à l'avant de la paroi interne médiane, de diamètre supérieur au diamètre de la paroi radiale interne et adaptée pour recevoir ladite au moins une bille d'actionnement lorsque la bague de verrouillage est dans la position de libération.
- Le diamètre externe de la partie annulaire avant est sensiblement égal au diamètre de la paroi radiale interne de la bague de manœuvre.
- Les moyens de rappel comprennent un ressort, qui prend appui sur le talon radial et sur le corps et qui rappelle la bague de verrouillage vers la position de blocage.
- La bague de manœuvre et la bague de verrouillage comprennent des moyens de butée par l'intermédiaire desquels la bague de manœuvre est entraînée vers l'arrière lorsque la bague de verrouillage est déplacée de la position de blocage vers la position de libération.
- La bague de manœuvre comprend une gorge interne arrière et les moyens de butée comprennent un jonc, intercalé entre un bord arrière du talon radial et un bord arrière de la gorge interne arrière.
- La bague de manœuvre est mobile axialement par rapport à la bague de verrouillage, entre une position extrême avant, dans laquelle une partie avant de la bague de manœuvre dépasse du corps vers l'avant, d'une première longueur de dépassement et dans laquelle un moyen de rappel entraîne la bague de manœuvre vers la position extrême avant ; et une position avancée, en arrière par rapport à la position extrême avant, dans laquelle la bague de manœuvre prend appui contre le talon radial de la bague de verrouillage et dans laquelle la partie avant de la bague de manœuvre dépasse du corps vers l'avant, d'une deuxième longueur de dépassement inférieure à la première longueur de dépassement.
- La bague de verrouillage comprend une partie cylindrique avant, de diamètre interne égal au diamètre externe de la partie annulaire avant du corps, et au moyen de laquelle la bague de verrouillage prend appui radialement sur une portée avant appartenant au corps et sur une portée arrière appartenant au corps, dans la position de blocage et dans la position de libération.
- La portée avant et la portée arrière sont distantes axialement d'une longueur supérieure au tiers, de préférence supérieure à la moitié du diamètre interne de la partie cylindrique avant.
- La bague de verrouillage comprend une face avant et, au cours de l'accouplement, ladite au moins une bille d'actionnement appuie sur la face avant pour entraîner axialement la bague de verrouillage jusqu'à la position de libération.
- En configuration désaccouplée, la bague de verrouillage est en butée vers l'avant contre ladite au moins une bille d'actionnement.
- La bague de manœuvre et la bague de verrouillage sont vissées l'une dans l'autre.

L'invention a également pour objet un ensemble de raccord fluidique, comprenant l'élément de raccord fluidique selon ce qui précède et l'élément de raccord fluidique complémentaire.

De préférence, l'élément de raccord fluidique complémentaire comprend un joint formant un bourrelet annulaire ; et la bague de manœuvre comprend une paroi extrémale avant, qui est conique et divergente vers l'avant, la paroi extrémale avant étant configurée pour entrer en contact avec le bourrelet annulaire, lorsque l'élément de raccord fluidique est accouplé avec l'élément de raccord fluidique complémentaire, avec ladite au moins une bille de verrouillage en position de verrouillage.

L'invention apparaîtra plus clairement à la lecture de la description qui va suivre, donnée uniquement à titre d'exemple non limitatif, et faite en référence aux dessins dans lesquels :
[Fig. 1] la figure 1 est une coupe longitudinale d'un ensemble de raccord selon un premier mode de réalisation de l'invention, comprenant un élément de raccord fluidique et un élément de raccord fluidique complémentaire et étant montré dans une configuration désaccouplée.
[Fig. 2] la figure 2 est une coupe similaire à celle de la figure 1, partielle, où l'ensemble de raccord est en cours d'accouplement, au point de basculement vers l'ouverture de soupapes.
[Fig. 3] la figure 3 est une coupe similaire à celle de la figure 2, partielle, où l'ensemble de raccord est en cours d'accouplement, avec une bague de manoeuvre en surcourse, et soupapes ouvertes.
[Fig. 4] la figure 4 est une coupe similaire à celle de la figure 3, partielle, où l'ensemble de raccord est en cours d'accouplement, avec les billes d'actionnement écartées de l'axe central.
[Fig. 5] la figure 5 est une coupe similaire à celle de la figure 4, partielle, où l'ensemble de raccord est en cours d'accouplement, avec une bague de manoeuvre en surcourse.
[Fig. 6] la figure 6 est une coupe similaire à celle de la figure 5, partielle, où l'ensemble de raccord est accouplé.
[Fig. 7] la figure 7 est une coupe similaire à celle de la figure 6, partielle, où l'ensemble de raccord est en cours de désaccouplement.
[Fig. 8] la figure 8 est une coupe longitudinale d'un ensemble de raccord selon un deuxième mode de réalisation de l'invention, comprenant un élément de raccord fluidique montré dans une configuration désaccouplée et un élément de raccord fluidique complémentaire, omis de la figure 8 mais identique à celui de la figure 1.
[Fig. 9] la figure 9 est une coupe similaire à celle de la figure 8, partielle, où l'ensemble de raccord est accouplé.

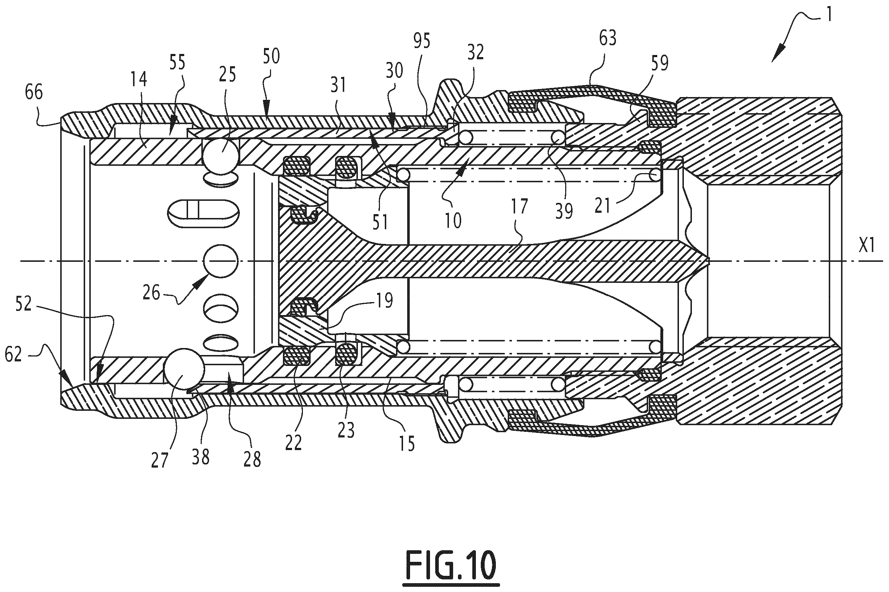

[Fig. 10] la figure 10 est une coupe longitudinale d'un ensemble de raccord selon un troisième mode de réalisation de l'invention, comprenant un élément de raccord fluidique montré dans une configuration désaccouplée et un élément de raccord fluidique complémentaire, omis de la figure 10 mais identique à celui de la figure 1.
[Fig. 11] la figure 11 est une coupe longitudinale d'un ensemble de raccord selon un quatrième mode de réalisation de l'invention, comprenant un élément de raccord fluidique montré dans une configuration désaccouplée et un élément de raccord fluidique complémentaire, omis de la figure 11.
[Fig. 12] la figure 12 est une coupe similaire à celle de la figure 11, partielle, où l'ensemble de raccord est accouplé.

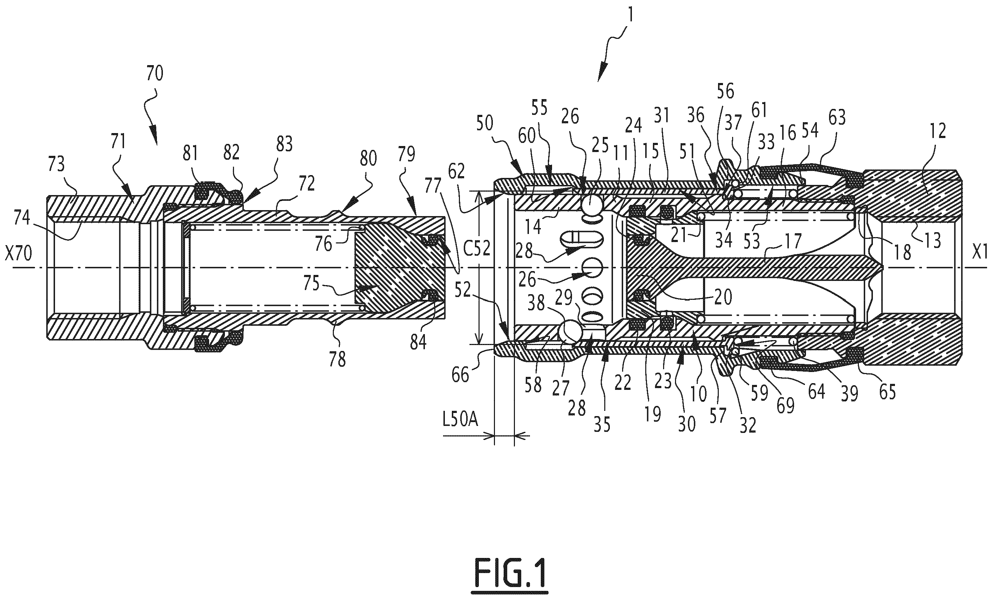

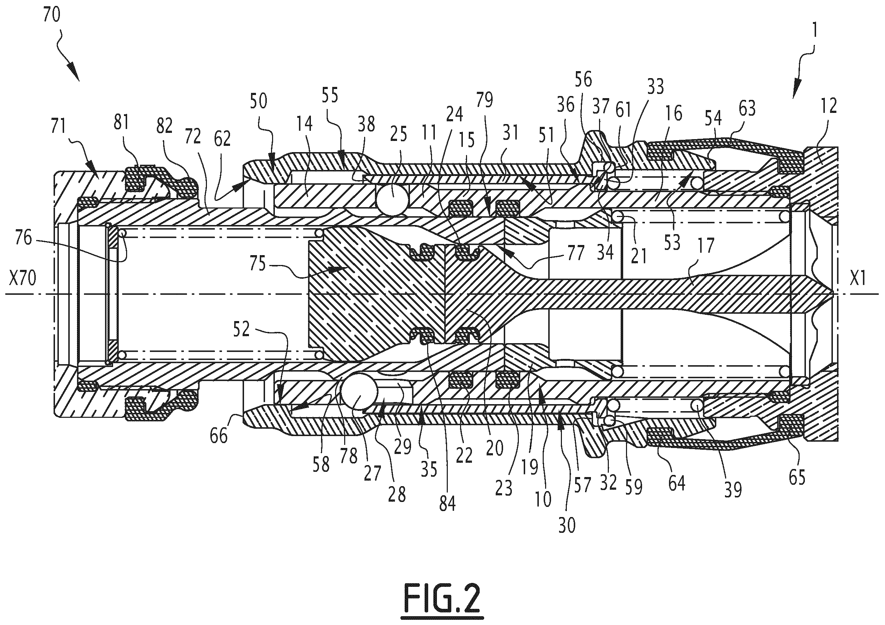

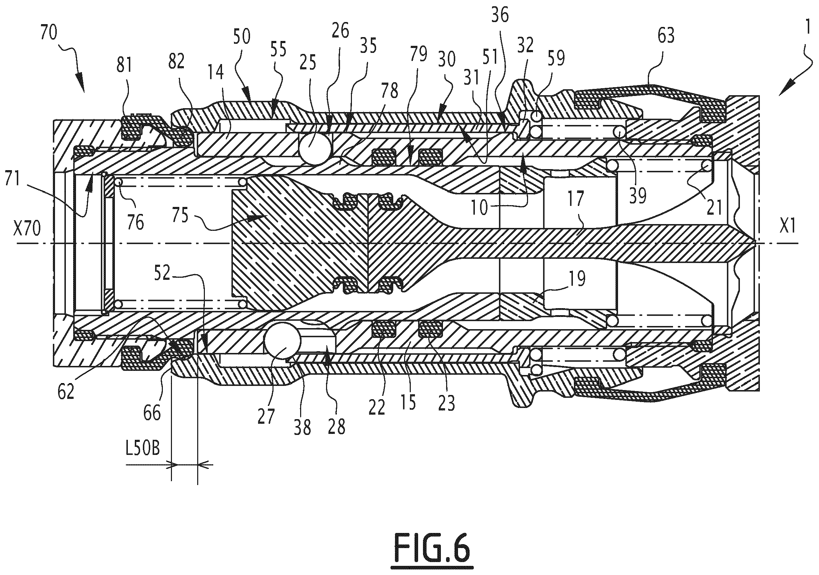

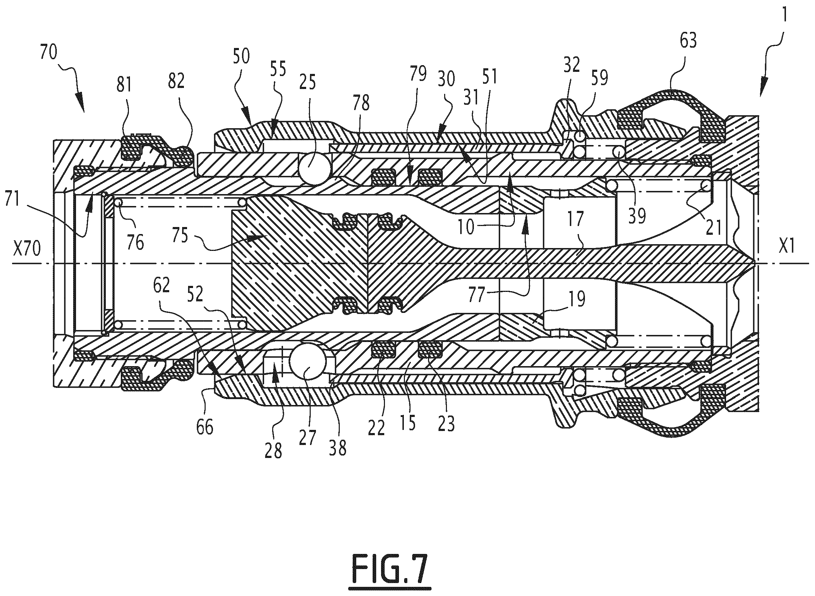

Les figures 1 à 7 montrent un ensemble de raccord fluidique selon un premier mode de réalisation de l'invention, comprenant un élément de raccord fluidique 1 et un élément de raccord fluidique complémentaire 70. L'élément de raccord fluidique 1 est dit « élément femelle » et l'élément 70 est dit « élément mâle » ou « about ». Sur la figure 1, les éléments 1 et 70 sont en configuration désaccouplée, et sont configurés pour atteindre une configuration où les éléments 1 et 70 sont accouplés comme montré sur la figure 6, après des étapes successives effectuées durant l'accouplement, comme montré chronologiquement aux figures 2 à 5. Lorsque les éléments 1 et 70 sont accouplés, ils sont verrouillés dans cette configuration et doivent être déverrouillés pour être à nouveau désaccouplés, comme montré sur la figure 7.

Chaque élément de raccord 1 et 70 définit un axe central, respectivement un axe central X1 et un axe central X70, qui sont configurés pour être coaxiaux lorsque les éléments 1 et 70 sont accouplés.

On définit un composant, une face ou une direction « avant » ou « distal » pour l'un des éléments de raccord 1 et 70, comme étant orienté en direction de l'autre élément de raccord 70 ou 1 lors de leur accouplement. On définit un composant, une face ou une direction « arrière » ou « proximal » pour l'un élément de raccord 1 et 70 comme étant orienté à l'opposé de l'autre élément de raccord 70 ou 1 lors de leur accouplement. On définit un composant intérieur ou une face intérieure comme étant orientée vers, ou comme étant plus proche de l'axe central X1 ou X70 de l'élément de raccord 1 ou 70 considéré. On définit un composant extérieur et une face extérieure comme étant orienté à l'opposé, ou comme étant plus éloigné, de l'axe central X1 ou X70 de l'élément 1 ou 70 considéré. On définit une direction intérieure comme étant orientée radialement vers l'axe central X1 ou X70 de l'élément de raccord 1 ou 70 considéré et une direction extérieure comme étant orientée radialement à l'opposé de l'axe central X1 ou X70 de l'élément 1 ou 70 considéré.

L'élément de raccord complémentaire 70 comprend un corps 71 coaxial avec l'axe X70, préférentiellement formé par corps de base 72 et un corps arrière 73 vissé au corps de base 72. Les corps 71 est tubulaire suivant l'axe X70, délimitant ainsi un volume interne ouvert à chaque extrémité du corps 71, pour la circulation du fluide. A l'extrémité arrière, le corps arrière 73 permet la connexion mécanique à un tuyau ou à une plaque de passage de fluide, non représentés, par exemple à l'aide d'un filetage intérieur 74 du corps arrière 73. A l'extrémité avant, le corps de base 72 forme une embouchure ouverte 77.

L'élément de raccord complémentaire 70 comprend un clapet central 75, ou soupape, disposé dans le volume interne, dans le corps de base 72. Le clapet central 75 est mobile suivant l'axe X70 dans le volume interne, entre une position fermée montrée sur la figure 1, où le clapet 75 obture l'embouchure 77 pour empêcher le passage du fluide au travers du volume interne, et une position ouverte montrée sur la figure 6, où le clapet central 75 a été déplacé vers l'arrière par rapport à l'embouchure 77, autorisant ainsi le passage du fluide au travers du volume interne.

Un joint annulaire 84 est préférentiellement disposé autour du clapet central 75 pour assurer l'étanchéité de l'obturation lorsque le clapet 75 est en position fermée, le joint 84 étant alors radialement interposé entre l'embouchure 77 et le clapet central 75.

L'élément de raccord complémentaire 70 comprend un ressort 76, disposé dans le volume interne du corps 71 et repoussant le clapet 75 vers la position fermée en prenant appui sur le corps 71.

Le corps 71, en particulier le corps de base 72, comporte une paroi radiale extérieure 79 qui s'étend vers l'arrière à partir de l'extrémité avant. Le corps 71, en particulier le corps de base 72, comprend une collerette 78, qui est formée sur la paroi radiale extérieure 79 et qui fait radialement saillie vers l'extérieur par rapport à la paroi radiale extérieure 79. La collerette 78 comprend une paroi distale 80, qui est inclinée, par exemple d'environ 40 degrés, par rapport à l'axe central X70.

L'élément de raccord complémentaire 70 comprend un joint annulaire avant 81, porté extérieurement par le corps 71. En particulier, le joint 81 est attaché au corps en ce qu'une partie arrière du joint 81 est reçue dans une gorge du corps arrière 73. Le joint 81 comprend également un bourrelet annulaire 82, en contact avec une paroi cylindrique intermédiaire 83 du corps 71, ici par exemple formée par le corps de base 72, en arrière de la paroi 79 et de la collerette 78.

L'élément de raccord 1 comprend un corps 10, qui s'étend le long de l'axe central X1. Le corps 10 est tubulaire et coaxial avec l'axe X1, de sorte à définir un volume interne traversant, ouvert à une extrémité avant du corps 10 et à une extrémité arrière du corps 10, permettant ainsi un passage de fluide à l'intérieur du corps 10, d'une extrémité à l'autre. Le corps 10 comprend préférentiellement un corps de base 11, formant l'extrémité avant, et un corps arrière 12, formant l'extrémité arrière et étant fixement solidaire du corps de base 11 en y étant vissé. Le corps de base 11 est préférentiellement une pièce de révolution autour de l'axe X1. De préférence, à l'extrémité arrière, le corps 10 est configuré pour être connecté à un tuyau ou une plaque de passage de fluide, non représentés. A cet effet, par exemple, le corps arrière 12 comporte un filetage intérieur 13.

Le corps 10, en particulier le corps de base 11, comprend une partie annulaire avant 14, comprenant l'extrémité avant du corps 10.

Le corps 10, en particulier le corps de base 11 comprend une partie annulaire centrale 15, dont le diamètre interne est réduit par rapport celui de la partie annulaire avant 14.

Le corps 10, en particulier le corps de base 11 comprend une partie annulaire arrière 16. La partie annulaire centrale 15 relie la partie annulaire avant 14 à la partie annulaire arrière 16. De préférence, le corps arrière 12 est vissé sur le corps de base 11 en étant vissé sur la partie annulaire arrière 16, qui comporte un filetage à cet effet.

La partie annulaire avant s'étend suivant l'axe central X1 entre la partie centrale 15 et l'extrémité avant du corps 10. La partie annulaire avant 14 est d'épaisseur réduite et contribue à la compacité radiale de l'élément de raccord 1.

Le corps 10 comprend avantageusement un piston 17, qui est agencé à l'intérieur du volume interne en étant avantageusement coaxial avec l'axe X1. Pour être fixement solidaire des corps 11 et 12, le piston 17 comprend préférentiellement un pied 18 axialement interposé entre les corps 11 et 12. Le piston 17 comprend aussi une tête 20, agencée vers l'avant par rapport au pied 18, à hauteur de la partie annulaire centrale 15 du corps 10.

Comme montré sur les figures 2 à 7, le corps 10 est configuré pour recevoir l'élément de raccord fluidique complémentaire 70 au cours d'accouplement et une fois les éléments 1 et 70 accouplés. En particulier, le corps 71 est emmanché dans le volume intérieur du corps 10. Au cours de l'accouplement et une fois accouplé, le corps 71, en particulier le corps de base 72, est agencé radialement entre le piston 17 et le corps 10.

Comme montré sur la figure 1, le clapet 75 est en position fermée lorsque l'élément de raccord 70 est en configuration désaccouplée. Au cours de l'accouplement avec l'élément de raccord 1, comme montré sur les figures 1 à 5, le clapet 75, initialement en position fermée, vient en appui contre la tête 20 du piston 17, de sorte que, alors que le corps 71 est déplacé vers l'avant par rapport au corps 10, le clapet 75 est repoussé vers l'arrière du corps 71 par la tête 20 jusqu'à atteindre la position ouverte, contre l'action du ressort 76.

L'élément de raccord 1 comprend un tiroir annulaire 19, ou soupape, qui est disposé dans le volume interne du corps 10. Le tiroir 19 est mobile par rapport au corps 10 suivant l'axe X1, entre une position fermée montrée sur la figure 1, où le tiroir 19 est agencé à hauteur de la tête 20 du piston 17 de façon à être radialement interposé entre le corps 10 et la tête 20, obturant ainsi le volume interne pour empêcher le passage du fluide, et une position ouverte montrée sur la figure 7, où le tiroir 19 est en arrière de la tête 20, libérant ainsi le passage du fluide au travers du volume interne du corps 10. En positon fermée, le tiroir annulaire 19 est préférentiellement en appui vers l'avant contre la partie annulaire centrale 15, qui forme à cet effet, par exemple, une paroi interne conique sur l'arrière de la partie annulaire centrale 15.

L'élément de raccord 1 comprend un ressort 21, disposé dans le volume interne du corps 10 et repoussant le tiroir 19 vers la position fermée en prenant appui sur le corps 10.

Au cours de l'accouplement, comme montré sur les figures 1 à 5, le tiroir 19, initialement en position fermée, vient en appui contre l'extrémité avant du corps 71, de sorte que, alors que le corps 71 est déplacé vers l'avant par rapport au corps 10, le clapet 75 est repoussé vers l'arrière du corps 10 par l'extrémité avant du corps 71 jusqu'à atteindre la position ouverte, contre l'action du ressort 21.

La partie annulaire centrale 15 comporte avantageusement, sur l'intérieur, deux gorges pour loger des joints annulaires 22 et 23. Un joint annulaire 24 est avantageusement positionné autour de la tête 20 du piston 17. Lorsque l'élément 1 est désaccouplé, le tiroir 19 est en position fermée, et est radialement interposé entre le joint 22 et le joint 24, comme montré sur la figure 1. Cela permet d'assurer l'étanchéité de l'obturation du volume interne du corps 10. Au début de l'accouplement, alors que le tiroir 19 est déplacé vers l'arrière à l'écart de la position fermée, en direction de la position ouverte, le joint 23, agencé en arrière par rapport au joint 22, prend le relais sur le joint 23 pour assurer l'étanchéité de l'obturation. Les joints 22 et 23 constituent donc une paire de joints qui forme avantageusement une double barrière d'étanchéité pour l'ensemble de raccord fluidique. L'accouplement se poursuivant, comme montré sur la figure 2, le corps de base 72 emmanché dans le volume interne du corps 10 et repoussant le tiroir 19 est reçu en étant interposé entre les joints 22 et 24, la paroi 79 en contact avec le joint 22 et l'embouchure 77 en contact avec le joint 24. Le corps 72 prend ainsi le relais sur les tiroir 19 pour maintenir le volume interne du corps 10 obturé. De même, au début de l'accouplement, alors que le clapet 75 est repoussé vers l'arrière, le joint 24 de la tête 20 du piston 17 vient au contact de l'embouchure 77 pour prendre le relais sur le joint 84 porté par le clapet 75, et ainsi maintenir le volume interne du corps 71 obturé.

L'élément de raccord 1 comprend plusieurs billes de verrouillage 25, ici neuf billes de verrouillage 25. On prévoit au moins une bille de verrouillage 25. Chaque bille de verrouillage 25 est reçue dans un logement radial respectif 26, appartenant à la partie annulaire avant 14 du corps 10. Chaque logement 26 traverse le corps 10 radialement de part en part. Chaque logement 26 est préférentiellement de forme cylindrique, centrée sur un axe radial par rapport à l'axe X1. Chaque logement 26 est de même diamètre que la bille 25 qu'il reçoit. Dans l'exemple illustré, où les figures sont à l'échelle, les billes 25 ont un diamètre de 4,5 mm (millimètres).

Chaque bille 25 est mobile par rapport au corps 10, suivant un axe radial par rapport à l'axe X1, en étant guidée dans cette mobilité par le logement 26 qui la reçoit. La mobilité de la bille 25 s'effectue entre une position de verrouillage, montrée sur les figures 1, 2, 5 et 6, et une position de déverrouillage, extérieure par rapport à la position de verrouillage. La bille 25 n'est en revanche pas mobile parallèlement à l'axe X1 par rapport au corps 10.

Comme montré sur la figure 6, lorsque l'ensemble de raccord fluidique est accouplé, chaque bille 25 est en position de verrouillage pour verrouiller l'élément de raccord fluidique 70 emmanché dans le corps 10, et ainsi maintenir l'ensemble de raccord fluidique accouplé, comme expliqué ci-après. Lorsque l'ensemble de raccord fluidique est accouplé et que la bille 25 est autorisée à être déplacée jusqu'à la position de déverrouillage, la bille 25 ne s'oppose pas à un retrait de l'élément de raccord 70 hors du corps 10, autorisant ainsi le désaccouplement de l'ensemble de raccord, comme expliqué ci-après.

A son extrémité intérieure, chaque logement 26 comporte avantageusement une réduction de diamètre, pour empêcher la bille 25 d'être déplacée vers l'intérieur jusqu'à s'échapper du logement 26 lorsque l'élément de raccord 1 est désaccouplé.

L'élément de raccord 1 comprend plusieurs billes d'actionnement 27, ici trois billes d'actionnement 27. On prévoit au moins une bille d'actionnement 27. Chaque bille d'actionnement 27 est reçue dans un logement allongé respectif 28, traversant radialement à la partie annulaire avant 14 du corps 10. Chaque logement 28 traverse le corps 10 radialement de part en part. Chaque logement 28 est de forme allongée, c'est à dire oblongue, parallèlement à l'axe X1. Ainsi, chaque logement 28 présente une longueur, mesurée parallèlement à l'axe X1, qui est supérieure à sa largeur, mesurée ortho-radialement par rapport à l'axe X1. Sur toute la longueur du logement 28, la largeur est égale au diamètre de la bille 27 que ce logement 28 reçoit. Dans l'exemple illustré, les billes 27 ont un diamètre d'environ 5mm. Les billes 27 ont un diamètre supérieur à celui des billes 25.

De préférence, des logements radiaux 26 et 28 sont positionnés à une même hauteur sur le corps 10, suivant l'axe X1. En particulier, les logements 26 sont positionnés à hauteur d'une extrémité arrière des logements 28. De préférence, les logements 26 et 28 sont répartis régulièrement autour de l'axe X1.

Chaque bille 27 est mobile par rapport au corps 10, suivant un axe longitudinal respectif, parallèle à l'axe X1, en étant guidée dans cette mobilité par le logement 28 qui la reçoit. La mobilité de la bille 27 s'effectue de l'extrémité avant à l'extrémité arrière du logement 28. Chaque bille 27 est également mobile par rapport au corps 10, suivant un axe radial respectif, en étant guidée dans cette mobilité par le logement 28 qui la reçoit, de préférence pour toute position de la bille 27 par rapport au corps 10 suivant l'axe X1.

A son extrémité intérieure, chaque logement 28 comporte avantageusement une réduction de section, pour empêcher la bille 27 d'être déplacée vers l'intérieur jusqu'à s'échapper du logement 28 lorsque l'élément de raccord 1 est désaccouplé. La réduction de section est avantageusement obtenue en prévoyant, au fond du logement allongé 28, une paroi inclinée 29, par exemple formée par l'outil de fraisage qui a formé le logement 28. La paroi 29 est avantageusement inclinée d'environ 70° par rapport à un axe qui est radial vis-à-vis de l'axe X1 et qui traverse le logement 28.

En configuration déverrouillée de l'élément de raccord 1, la bille d'actionnement 27 est dans une position avant par rapport au corps 10, en butée contre l'extrémité avant du logement 28.

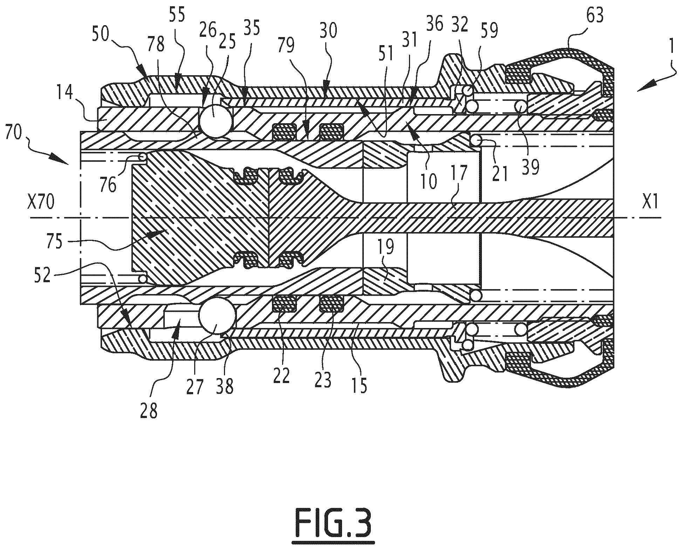

L'élément de raccord 1 comprend une bague de verrouillage 30, qui est agencée autour du corps 10, en particulier autour du corps de base 11. La bague de verrouillage 30 est mobile par rapport au corps 10 suivant l'axe X1. La bague 30 est préférentiellement agencée en avant du corps arrière 12 pour toute ses positions par rapport au corps 10. La mobilité de la bague 30 s'effectue entre une position de blocage, montrée aux figures 1, 2, 5 et 6, et une ou plusieurs positions de libération, montrées sur les figures 3, 4 et 7.

La bague de verrouillage 30 comprend un talon radial 32 formant l'extrémité arrière de la bague 30, et, avantageusement, une partie cylindrique avant 31, à l'avant du talon radial 32.

Le diamètre intérieur de la partie cylindrique avant 31 est égal au, ou pour le moins proche du, diamètre externe de la partie annulaire avant 14 du corps 10. La partie cylindrique avant 31 est alors en contact avec la partie annulaire avant 14, laquelle assure ainsi le guidage radial de la bague de verrouillage 30 par coulissement sur la partie annulaire avant 14. Autrement dit, la partie annulaire avant 14 forme une portée avant 35 appartenant au corps 10, sur laquelle la bague de verrouillage 30 prend appui, via la partie avant 31, dans la position de blocage comme dans la position de libération. Plus précisément, la portée 35 est formée par une surface radiale à l'arrière des logements allongés 28, dont le diamètre externe est égal au diamètre interne de la partie cylindrique avant 31. Autrement dit, la bague 30 est toujours en contact avec la partie annulaire avant 14 du corps 10 constituant la portée avant 35, quelle que soit la position de la bague 30 par rapport au corps 10.

Le corps 10 comprend également une portée arrière 36, qui est formée par une collerette arrière, faisant saillie à partir d'une surface radiale externe de la partie annulaire centrale 15. Le diamètre intérieur de la partie cylindrique avant 31 est égal au, ou pour le moins proche du, diamètre externe de la collerette arrière du corps 10. La partie cylindrique avant 31 est alors en contact avec la collerette, constituant ainsi la portée arrière 36 assurant le guidage radial de la bague de verrouillage 30 par coulissement sur la portée arrière 36. La bague de verrouillage 30 prend appui sur la portée arrière 36, via la partie avant 31, dans la position de blocage comme dans la position de libération. Autrement dit, la bague 30 est toujours en contact avec la portée 36, quelle que soit la position de la bague 30 par rapport au corps 10.

En soi, le fait de prévoir deux portées 35 et 36 distantes permettent un guidage optimal de la bague de verrouillage 30 et limite les effets d'arc-boutement. De préférence, la portée avant 35 et la portée arrière 36 sont distantes axialement d'une longueur supérieure au tiers, de préférence supérieure à la moitié du diamètre interne de la partie cylindrique avant 31.

Le talon radial 32 forme avantageusement un anneau externe 33, qui dépasse radialement vers l'extérieur de la partie cylindrique avant 31. Par exemple, l'anneau externe 33 mesure environ 33.8 mm de diamètre. Le talon radial 32 présente un diamètre extérieur supérieur au diamètre de la partie cylindrique avant 31.

Le talon radial 32 forme avantageusement un anneau interne 34, qui dépasse radialement vers l'intérieur de la partie cylindrique avant 31, c'est-à-dire présentant un diamètre intérieur inférieur à celui de la partie cylindrique 31.

De préférence, la collerette arrière du corps 10, qui forme déjà la portée arrière 36, forme également la butée axiale 37, contre laquelle la bague de verrouillage 30 vient en butée vers l'avant via l'anneau interne 34 du talon radial 32.

Les dispositions qui précèdent font que la bague de verrouillage 30 est avantageusement peu volumineuse radialement.

A son extrémité avant, la bague de verrouillage 30 présente avantageusement une face avant 38, préférentiellement sous la forme d'une paroi conique centrée sur l'axe X1, qui est divergente vers l'avant. De préférence, la face avant 38 est orientée selon un angle d'environ 38 degrés par rapport à l'axe central X1. Cette face avant 38 est qualifiée de « pente d'actionnement », puisque c'est par son intermédiaire que la bague de verrouillage 30 interagit avec les billes d'actionnement 27.

L'élément de raccord 1 comprend des moyens de rappel pour rappeler la bague de verrouillage 30 vers la position de blocage. Ici, les moyens de rappel sont constitués par un ressort 39, qui est monté autour du corps 10, en particulier autour du corps de base 11. Le ressort 39 prend appui, vers l'avant, sur la bague 30, en particulier sur le talon radial 32. Le ressort 39 prend appui, vers l'arrière, sur le corps 10, en particulier sur une paroi avant du corps arrière 12. Le ressort 39, ainsi interposé entre la bague 30 et le corps 10, rappelle la bague de verrouillage 30 vers la position de blocage.

Dans différentes configurations de l'élément de raccord 1 illustrées aux figures 1, 2, 3, 4 et 6, notamment en configuration désaccouplée, en configuration accouplée et au début de l'accouplement, la bague de verrouillage 30 est en appui vers l'avant contre les billes d'actionnement 27 via la face avant 38. Dans ces configurations, la face avant 38 maintient les billes d'actionnement radialement vers l'intérieur, contre la paroi inclinée 29.

En position de blocage, la bague de verrouillage 30 bloque les billes de verrouillage 25 en position de verrouillage. Pour cela, la bague de verrouillage 30, en particulier la partie cylindrique avant 31, recouvre les logements 26 de façon à s'opposer à un déplacement des billes de verrouillage 25 vers la position de libération.

En position de libération, la bague de verrouillage 30 ne s'oppose pas à la mobilité des billes 25 entre la position de blocage et la position de libération. Pour cela, la bague de verrouillage 30 est en retrait vers l'arrière par rapport aux logements 26, de sorte à les découvrir au moins partiellement, ce qui laisse la place aux billes 25 de se déplacer radialement vers l'extérieur. En particulier, en position de libération, la face avant 38 de la partie cylindrique avant 31 est dégagée vers l'arrière.

Les billes d'actionnement 27 dépassent radialement de la partie 14 du corps 10 vers l'extérieur, notamment pour pouvoir entrer en contact vers l'arrière contre la bague de verrouillage 30, à savoir contre la face avant 38. De préférence, les billes 27 dépassent ainsi dans toutes les configurations de l'élément de raccord 1, notamment la configuration accouplée, la configuration désaccouplée et pendant tout l'accouplement.

Les billes d'actionnement 27 dépassent radialement de la partie 14 du corps 10 vers l'intérieur, pour pouvoir être repoussées vers l'arrière par la paroi distale 80 de la collerette 78 lors de l'accouplement. Les billes d'actionnement 27 dépassent radialement de la partie 14 du corps 10 vers l'intérieur en configuration désaccouplée, au début de l'accouplement, et en configuration accouplée, comme montré aux figures 1, 2, 3, 6 et 7.

Comme montré sur la figure 1, en configuration désaccouplée du raccord où la bille 27 est dans la position avant, la bille d'actionnement 27 est axialement interposée entre la paroi inclinée 29 du logement allongé 28 et la face avant 38 de la bague de verrouillage 30. La présence de la paroi inclinée 29 évite alors une éjection de la bille 27 vers l'intérieur du corps 10. Comme montré sur les figures 2 et 3, au cours de l'accouplement, la paroi distale 80 de la collerette 78 vient en appui contre la bille d'actionnement 27, repoussant ainsi les billes d'actionnement 27 vers l'arrière le long du logement allongé 28. En conséquence, les billes d'actionnement 27 sont axialement interposées entre la paroi distale 80 de la collerette 78 et la face avant 38 de la bague de verrouillage 30, et repoussent à leur tour la bague de verrouillage 30 de la position de blocage jusqu'à la position de libération. La paroi distale 80 repousse alors les billes 27 contre l'effort appliqué par le ressort 39 sur la bague de verrouillage 30. Dans cette situation également, la présence de la paroi inclinée 29 évite alors une éjection de la bille 27 vers l'intérieur du corps 10.

Le fait que les billes 27 entrent en contact avec la face avant 38 de la bague de verrouillage 30 permet avantageusement de limiter l'encombrement radial de la bague de verrouillage 30.

Par ailleurs, le fait que la bague de verrouillage 30 soit en appui vers l'avant contre les billes 27 en configuration désaccouplée implique que les billes 27 sont en position pour entraîner la bague de verrouillage 30 vers l'arrière dès qu'elles entreront en contact avec la collerette 78 de l'élément 70.

L'élément de raccord 1 comprend une bague de manœuvre 50, disposée autour de la bague de verrouillage 30 et mobile par rapport au corps 10 suivant l'axe central X1. La bague de manœuvre 50 est principalement destinée à être actionnée par un utilisateur de l'élément de raccord 1 pour déverrouiller l'élément de raccord 1 lorsque l'élément de raccord 1 est en configuration accouplée.

La bague de verrouillage 30, en particulier la partie avant cylindrique 31, est reçue dans la bague de manœuvre 50, en particulier dans une paroi interne médiane 51 de la bague de manœuvre 50.

Dans ce mode de réalisation, la bague 50 est mobile non seulement par rapport au corps 10, mais aussi par rapport à la bague de verrouillage 30, suivant l'axe X1. A cette fin, la paroi interne médiane 51 est de forme cylindrique avec un diamètre ajusté à celui de la partie avant 31 de la bague de verrouillage 30, de façon que les bagues 30 et 50 coulissent l'une par rapport à l'autre suivant l'axe X10, en particulier par coulissement de la paroi interne médiane 51 autour de la partie avant 31.

La bague de manœuvre 50 comprend une paroi radiale interne 52, radialement en regard de la partie annulaire avant 14 du corps 10, de préférence pour toute position de la bague 50 par rapport au corps 10. Autrement dit, la paroi 52 est à hauteur de la partie annulaire avant 14 pour toute position de la bague 50 par rapport au corps 10. La paroi 51 est en arrière de la paroi 52.

La paroi radiale interne 52 présente un diamètre mesuré radialement à l'axe X1, par exemple de 30,5 mm, qui est inférieur au diamètre d'un cylindre C52, centré sur l'axe central X1 et comprenant les billes d'actionnement 27, c'est-à-dire que le cylindre C52, centré sur l'axe central X1 tangente les billes d'actionnement 27 du côté de l'extérieur du corps 10. Cela limite l'introduction de pollutions entre la bague 50 et le corps 10. Le cylindre C52 est tangent aux billes 27 et est défini pour les billes 27 en position radiale interne, c'est-à-dire telles qu'elles sont positionnées en configuration désaccouplée de l'élément 1. Par exemple, le diamètre externe de la partie annulaire avant 14 du corps 10 est d'environ 30 mm. Dans le présent exemple, le cylindre C52 a un diamètre de 31 mm. Quels que soient les diamètres choisis, la paroi 52 a préférentiellement un jeu radial réduit avec la partie annulaire avant 14 du corps de base 11. De préférence, le diamètre externe de la partie annulaire avant 14 est sensiblement égal au diamètre de la paroi radiale interne 52 de la bague de manœuvre 50. Par « sensiblement », on entend que le diamètre externe de la partie 14 est égal au diamètre de la paroi 52, avec présence d'un jeu, le plus réduit possible, autorisant le coulissement de la paroi radiale 52 le long de la partie 14 suivant l'axe X1. Le dimensionnement de la paroi radiale interne 52 permet une compacité de l'extrémité avant de la bague de manœuvre 50 et plus généralement permet une compacité radiale de l'enveloppe de l'élément de raccord 1 sur sa partie avant. Ce dimensionnement est avantageux pour l'encombrement et le poids de l'élément de raccord 1.

Dans le présent exemple, la paroi radiale interne 52 est cylindrique et coaxiale avec l'axe X1, c'est-à-dire qu'elle présente le même diamètre sur une certaine longueur. Toutefois « paroi radiale interne » couvre aussi le cas où la paroi 52 forme une arête circulaire centrée sur l'axe X1, laquelle est alors de diamètre inférieur au diamètre du cylindre C52.

En variante, la bague de manœuvre 50 pourrait porter un joint, reçu dans une gorge ménagée dans la paroi 52, et coopérant avec la partie annulaire avant 14, pour limiter davantage l'introduction de pollutions. Dans ce cas, on prévoit que le bord de la gorge, formé par la paroi 52, a un diamètre inférieur au diamètre du cylindre C52.

La bague de manœuvre 50 comprend avantageusement une gorge interne cylindrique 55, agencée axialement entre la paroi radiale interne 52 et la paroi interne médiane 51. Autrement dit, la gorge 55 est à l'arrière de la paroi 52 et à l'avant de la paroi 51. A hauteur de la gorge 55, le diamètre de la bague de manœuvre est supérieur à celui des parois 51 et 52 et du cylindre C52 et vaut par exemple 34 mm. La paroi interne médiane 51 a par exemple un diamètre de 32 mm, inférieur au diamètre de la gorge 55.

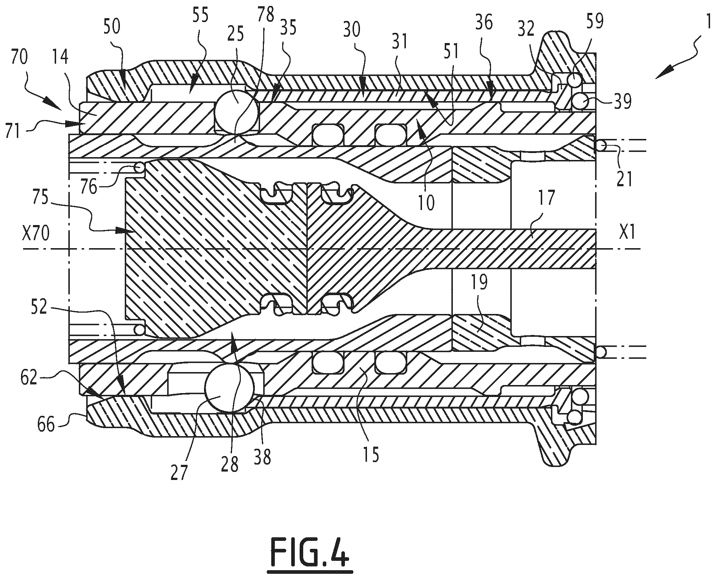

Comme montré sur la figure 4, la gorge 55 est configurée pour recevoir les billes d'actionnement 27 lorsque la bague de verrouillage 30 est dans la position de verrouillage. Dans cette situation, les billes d'actionnement 27 sont en position radiale externe par rapport au corps 10. Également les billes de verrouillage 25 sont en position radiale externe. Avantageusement, la gorge 55 est fermée par la paroi interne médiane 51 de sorte que l'espace de réception des billes d'actionnement 27 et des billes de verrouillage 25 n'est pas exposé aux pollutions extérieures.

De préférence, la bague de manœuvre 50 comprend une paroi conique arrière 58, divergente vers l'arrière, qui relie la paroi 52 à la gorge 55. De préférence, la bague de manœuvre 50 comprend une paroi conique avant 60, divergente vers l'avant, qui relie la gorge 55 à la paroi 51.

La bague de manœuvre 50 comprend avantageusement une gorge interne arrière 56, à l'arrière de la paroi médiane 51. La gorge interne arrière 56 présente par exemple un diamètre de 36 mm.

A l'arrière de la gorge 56, la bague de manœuvre 50 comprend avantageusement une paroi interne arrière 53, qui est cylindrique. Le long de l'axe X1, la paroi 53 s'étend depuis la gorge 56 jusqu'à une extrémité arrière 54 de la bague 50. La paroi arrière interne 53 présente un diamètre externe strictement supérieur au diamètre externe du talon 32 de la bague de verrouillage 30, ce qui permet avantageusement, au cours de l'assemblage de l'élément de raccord 1, que la bague de manœuvre 50 soit emmanchée sur la bague de verrouillage 30 par l'avant, ou que la bague de verrouillage 30 soit emmanchée dans la bague de manœuvre 50 par l'arrière. La paroi 53 présente par exemple un diamètre de 34 mm. La gorge 56 relie avantageusement la paroi 51 à la paroi 53. Le diamètre de la paroi radiale interne 52 est inférieur au diamètre de l'anneau externe 33 du talon radial 32, ce qui nécessite l'assemblage par l'emmanchement de la bague de manœuvre 50 sur la bague de verrouillage 30 par l'avant.

Un bord avant 57 de la gorge 56 forme préférentiellement une surface de butée avant pour l'anneau externe 33 du talon 32 de la bague de verrouillage 30, en position de blocage de la bague de verrouillage 30.

La gorge 56 loge avantageusement un jonc 59, présentant une section transversale ayant par exemple un diamètre 1,5 mm. Le jonc 59 forme préférentiellement une surface de butée arrière pour l'anneau externe 33 du talon 32 de la bague de verrouillage 30, le jonc 59 venant lui-même en butée arrière contre un bord arrière 61 de la gorge 56. Plus précisément, un bord arrière 69 de l'anneau externe 33 du talon 32 vient en appui contre le jonc 59, le jonc 59 étant intercalé entre ledit bord arrière 69 du talon 32 et le bord arrière 61. La bague 30 est alors captive de la bague 50, en ce que le talon 32 est capturé axialement entre le bord avant 57 et le jonc 59.

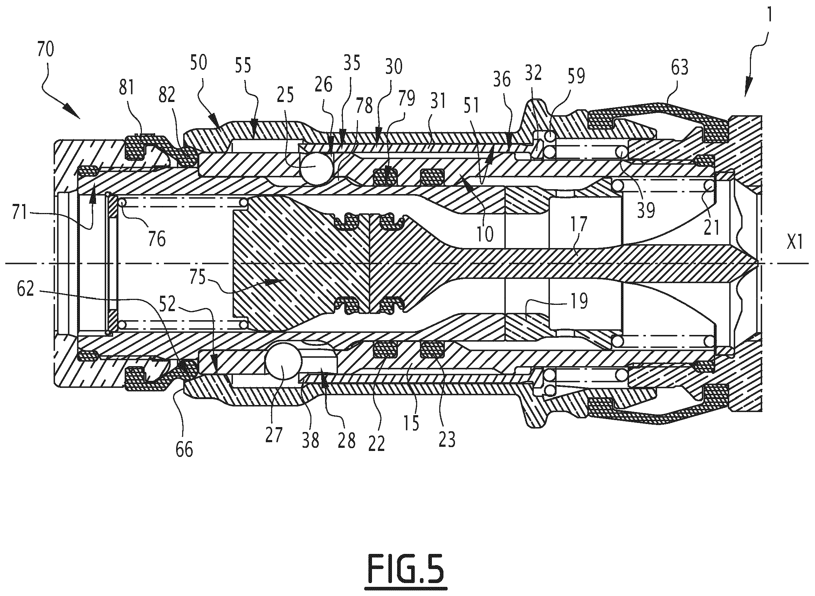

Plus généralement, le bord avant de la gorge 56 et le bord arrière 61, avec le jonc 59, forment des moyens de butée pour la bague de verrouillage 30 dans son mouvement axial vers l'avant et vers l'arrière par rapport à la bague de manœuvre 50. Cet ensemble permet par exemple un jeu axial de 0.5 mm entre les deux bagues 30 et 50. Ce faisant, la bague de manœuvre 50 est mobile axialement par rapport à la bague de verrouillage 30 entre une position extrême avant, montrée sur les figures 1, 2, 3 et 4, et une position avancée, montrée sur les figures 5, 6 et 7, en arrière par rapport à la position extrême avant. En position extrême avant, la bague 50 est en butée vers l'avant contre la bague 30 par mise en butée du jonc 59 contre le talon 32. En position avancée, la bague 50 est en butée vers l'arrière contre la bague 30 par mise en butée du bord avant 57 contre le talon 32.

Par l'intermédiaire de ces moyens de butée et de l'anneau externe 33 du talon 32, la bague de manœuvre 50 est entraînée vers l'arrière lorsque la bague de verrouillage 30 est déplacée de la position de blocage vers la position de libération, comme montré sur les figures 3 et 4. Inversement, la bague de verrouillage 30 est entraînée de la position de blocage vers la position de libération par la bague de manœuvre 50 via l'anneau externe 33 du talon 32, via lesdits moyens de butée, lorsque la bague de manœuvre 50 est entrainée vers l'arrière par rapport au corps 10, comme montré sur la figure 7. Ce déplacement de la bague 50 vers l'arrière est par exemple effectué par l'utilisateur. La mise en œuvre de ces moyens de butée a donc pour effet que le mouvement axial des bagues 30 et 50 est lié. Ces moyens de butée impliquent aussi que la butée de la bague de manœuvre 50 n'a pas besoin d'être effectué à l'aide du corps 10, ce qui permet avantageusement que, lors de l'assemblage de l'élément de raccord 1, la bague 50 puisse être montée par l'avant.

Il résulte également de ces moyens de butée que le ressort 39 tend à déplacer la bague de manœuvre 50 vers l'avant, par l'intermédiaire de la bague de verrouillage 30, lorsque le talon 32 vient en appui contre le bord avant 57 de la gorge 56. Cela permet d'obtenir une bonne compacité radiale de l'élément de raccord 1, puisque l'entraînement de la bague 50 par le ressort 39 est effectuée de façon indirecte, à savoir via la bague 30.

De préférence, l'élément de raccord 1 comprend également un fourreau de protection 63, dont un bourrelet avant 64 est reçu dans une gorge externe appartenant à la bague de manœuvre 50 et dont un bourrelet arrière 65 est reçu dans une gorge appartenant au corps 10, notamment au corps arrière 12. Le fourreau de protection 63 est préférentiellement en élastomère ou en matière plastique. Le fourreau de protection 63 est une pièce de révolution autour de l'axe X1. Le fourreau 63 est élastiquement déformable, par exemple à la façon d'un soufflet, pour que le bourrelet 64 puisse se déplacer axialement par rapport au bourrelet 65. Le fourreau 63 protège ainsi l'espace entre l'extrémité 54 de la bague 50 et le corps 10 contre l'introduction de pollutions.

De préférence, l'élasticité du fourreau de protection 63 est suffisante pour que le fourreau 63 serve de moyen de rappel élastique pour la bague de manœuvre 50, par rapport au corps 10. Le fourreau de protection 63 rappelle ainsi la bague de manœuvre 50 vers l'avant par rapport au corps 10. Le fourreau 63 tend ainsi à entraîner la bague 50 vers la position extrême avant, par rapport à la bague de verrouillage 30.

De préférence, la bague de manœuvre 50 comprend une paroi extrémale avant 62, à l'avant de la paroi radiale interne 52 et en arrière de la partie avant 66. La paroi extrémale avant 62 est conique et divergente vers l'avant. Comme montré sur les figures 5 et 6, la paroi extrémale avant 62 entre en contact avec le bourrelet annulaire 82 du joint 81, en fin d'accouplement de l'élément de raccord fluidique 1 avec l'élément de raccord fluidique complémentaire 70 et lorsqu'ils sont accouplés, avec les billes 25 en position de verrouillage. Le joint 81 rend ainsi l'ensemble de raccord accouplé étanche aux pollutions externes susceptibles de s'introduire entre le corps 71 et la bague 50.

Comme montré sur la figure 1, en position extrême avant de la bague 50, une partie avant 66 de la bague de manoeuvre 50 dépasse du corps 10, notamment de la partie 14, vers l'avant, d'une première longueur de dépassement L50A, mesurée parallèlement à l'axe X1. La partie avant 66 constitue l'extrémité avant de la bague 50, en avant par rapport à la paroi 52 et à la paroi extrémale avant 62. En configuration de déverrouillage, la longueur L50A est atteinte.

Comme montré sur la figure 6, en position avancée de la bague 50, la partie avant 66 de la bague de manoeuvre dépasse du corps 10, notamment de la partie 14, vers l'avant, d'une deuxième longueur de dépassement L50B qui est inférieure à la première longueur de dépassement L50A. De préférence, on mesure les longueurs L50A et L50B pour la même position de la bague de verrouillage 30, par exemple lorsque la bague de verrouillage 30 est en position de blocage.

En fonction de la distance entre le bourrelet 82 et la collerette 78 de l'élément de raccord 70, la bague 50 prend une position par rapport au corps 10 entre la position extrême avant et la position avancée, lorsque l'ensemble de raccord fluidique est accouplé. Autrement dit, le jeu axial entre la bague 50 et la bague 30 permet avantageusement à la bague 50 d'avoir une position adaptée aux dispersions géométriques de l'élément de raccord 70. Dans le cas de la figure 6, la bague 50 s'est positionnée alors que pour l'élément de raccord complémentaire 70, le bourrelet 82 est plus proche de la collerette 78 que pour d'autres éléments de raccord complémentaire.

De préférence, la bague 50 est en laiton, alors que la bague 30, le corps 10 et les billes 25 et 27 sont en inox.

En variante, le ressort 39 est supprimé et le fourreau de protection 63, par sa forte capacité élastique, peut suffire à réaliser la fonction de moyen de rappel de la bague de verrouillage 30. Autrement dit, dans cette variante, le fourreau de protection 63 est suffisamment élastique pour entrainer la bague de verrouillage 30 de la configuration de libération vers la configuration de blocage par l'intermédiaire de la bague de manoeuvre 50 et des moyens de butée.

En variante, l'angle de la paroi distale 80 de la collerette 78 est supérieur à l'angle de la face avant 38 par rapport à l'axe central X1.

Ci-dessous, on décrit un procédé pour accoupler l'ensemble de raccord décrit ci-avant, alors qu'il était désaccouplé.

Comme montré sur la figure 2, l'élément 70 est inséré dans l'élément 1 par l'utilisateur alors que l'élément 1 était en configuration désaccouplée, ce qui provoque d'abord une mise en appui du piston 17 contre le clapet 75 et du corps 71 contre le tiroir 19, de sorte que le clapet 75 et le tiroir 19 débutent leur déplacement vers l'arrière du corps 71 et 10 de leur élément 70 et 1 respectif.

Comme montré sur la figure 2, l'élément 70 vient ensuite au contact des billes d'actionnement 27, qui sont repoussées vers l'arrière de leur logement allongé 28 par la collerette 78. Chaque bille d'actionnement 27 est alors coincée entre la bague de verrouillage 30 et l'élément 70, précisément entre la face avant 38 inclinée, par exemple à 38 degrés, et la paroi distale 80 inclinée, par exemple à 40 degrés. Un effort avec une résultante radiale vers l'intérieur s'applique ainsi sur les billes 27 et garantit leur maintien en prise entre l'élément 70 et la bague de verrouillage 30 lorsque l'élément 70 repousse les billes 27. Le déplacement axial des billes d'actionnement 27 entraîne axialement la bague de verrouillage 30 à l'encontre du ressort 39, ce qui rend l'élément de raccord 1 « automatique ».

La bague de verrouillage 30 pressée par le ressort 39 rattrape un éventuel jeu axial avec le jonc 59 et le bord arrière 61 de la bague de manœuvre 50. Par l'insertion de l'élément 70, la bague de verrouillage 30 entraine dans son mouvement le jonc 59, entraînant à son tour la bague de manœuvre 50 vers l'arrière. Au recul de la bague de manœuvre 50, le fourreau de protection 63 se replie. La paroi radiale 52 de la bague de manœuvre 50, qui était en regard de la partie annulaire avant 14, reste en regard de la partie annulaire avant 14, limitant ainsi l'intrusion de poussières pendant le fonctionnement. Chaque bille d'actionnement 27 est repoussée par la collerette 78 vers l'arrière, sans être encore au contact de l'extrémité arrière du logement allongé 28 qui la reçoit.

Lorsque la collerette 78 arrive au contact des billes de verrouillage 25, les centres des billes de verrouillage 25 et des billes d'actionnement 27 sont sensiblement alignés radialement, aux différences géométriques près, sachant que les diamètres des billes 25 et 27 sont différents. La bague de manœuvre 50 est suffisamment entrainée sur l'arrière pour que la paroi interne médiane 51 soit en arrière par rapport aux billes 25 et 27, alors que la gorge 55 parvient à la hauteur des billes 25 et 27 le long de l'axe X1, offrant un espace radial aux billes 25 et 27 pour leur mouvement radial externe. Dans cette configuration, chaque bille de verrouillage 25 dispose d'un jeu radial par rapport à la bague de verrouillage 30 et chaque bille d'actionnement 27 n'est pas encore au contact de l'extrémité arrière du logement allongé 28 qui la reçoit. Ce jeu radial permet à chaque bille de verrouillage 25 d'amorcer son déplacement radial vers l'extérieur dans son logement 26, par l'avancement de la collerette 78 de l'élément complémentaire 70.

Comme montré sur la figure 3, la progression de l'élément complémentaire 70, et donc celle de la bague de verrouillage 30, se poursuit, à l'encontre des efforts produits par les ressorts 21, 39 et 76. Lorsque les billes d'actionnement 27 parviennent au contact de l'extrémité arrière de leur logement allongé 28 respectif, la position qu'a atteinte la bague de verrouillage 30 autorise la mise en position de libération des billes de verrouillage 25. Cela garantit les billes de verrouillage 25 n'agissent pas sur le déplacement vers l'arrière de la bague de verrouillage 30 et limite l'effort à fournir par l'utilisateur pour l'accouplement. Dans cette configuration, les billes de verrouillage 25, repoussées radialement vers l'extérieur par la collerette 78, dépassent radialement sur l'extérieur du corps 10, en particulier à l'extérieur de la partie 14. Dès lors, si les billes d'actionnement 27 venaient à perdre le contact avec l'élément complémentaire 70, la bague de verrouillage 30, repoussée sur l'avant par le ressort 39, ne pourrait pas être repoussée dans une position où la bague 30 pourrait bloquer les billes d'actionnement 27 par-delà la collerette 78 et où les billes de verrouillage 25 ne seraient pas en position de verrouillage par-delà la collerette d'about 78. Autrement dit il n'est pas possible de faire passer les billes d'actionnement 27 derrière la collerette 78 sans verrouiller l'élément complémentaire 70 avec les billes de verrouillage 25. Cela permet d'éviter une situation dans laquelle une configuration non verrouillée serait atteinte, non visible par l'utilisateur.

Comme montré sur la figure 4, chaque bille d'actionnement 27 est ensuite guidée radialement vers l'extérieur par coopération avec la surface du logement allongé 28 qui la reçoit, sous la progression de l'élément complémentaire 70, jusqu'à ce que la bille d'actionnement 27 passe par-dessus la collerette 78. Parallèlement, la bague de verrouillage 30 poursuit son recul par rapport au corps 10. Simultanément, ou juste avant que les billes d'actionnement 27 ne passent par-dessus la collerette 78, les billes de verrouillage 25 laissent passer la collerette 78. Comme montré sur la figure 5, la bague de verrouillage 30 est repoussée sur l'avant par rapport au corps 10 par le ressort 39, dans la position de verrouillage où la bague 30 bloque les billes de verrouillage par-delà la collerette 78. La paroi interne médiane 51 de la bague de manoeuvre 50 recouvre alors indirectement les billes de verrouillage 25, ce qui guide la bague de verrouillage 30 et confirme le verrouillage avec la bague de verrouillage 30.

Dans toute la phase d'accouplement, les billes de verrouillage 25 n'ont aucune action sur le déplacement de la bague de verrouillage 30. L'accouplement est automatique dans le sens où la seule action d'emmanchement de l'utilisateur a conduit à l'accouplement des deux éléments de raccord 1 et 70. En particulier, aucune action supplémentaire n'est à initier par l'utilisateur pour reculer la bague de verrouillage 30.

Comme montré sur la figure 6, lorsque l'ensemble de raccord est accouplé, la bague de verrouillage 30 est repoussée en butée vers l'avant contre les billes d'actionnement 27, qui ne viennent pas au contact de l'élément complémentaire 70. En effet, la bague de verrouillage 30 n'est pas en butée contre la collerette arrière de la portée 36 alors que les billes d'actionnement 27 sont en contact avec la face avant 38 de la bague de verrouillage, et maintenus au fond du logement allongé 28 par l'effort du ressort 39. La position de la bague de verrouillage 30 par rapport au corps 10 lorsque l'ensemble de raccord est accouplé est axialement identique la position de la bague de verrouillage 30 en configuration désaccouplée. La bague de manœuvre 50 est repoussée en avant par le fourreau de protection 63 et est en contact étanche vers l'avant avec le bourrelet annulaire 82 du joint 81 de l'élément complémentaire 70.

Ci-dessous, on décrit un procédé pour désaccoupler l'ensemble de raccord décrit ci-avant, alors qu'il était accouplé.

Pour le désaccouplement, comme montré sur la figure 7, l'utilisateur recule la bague de manœuvre 50 par rapport au corps 10. La bague de manœuvre 50 entraine ainsi la bague de verrouillage 30 de la position de blocage vers la position de libération, par mise en butée de la bague 50 vers l'arrière contre le talon radial 32. Ceci libère aussi un espace radial pour les billes de verrouillage 25 dans la gorge 55 de la bague de manœuvre 50. Egalement, les billes d'actionnement 27 sont repoussées par la collerette 78 dans la gorge 55. L'utilisateur retire alors l'élément complémentaire 70, qui est repoussé également par les ressorts 21 et 76. Les deux éléments 1 et 70 sont ainsi dissociés, c'est-à-dire désaccouplés.

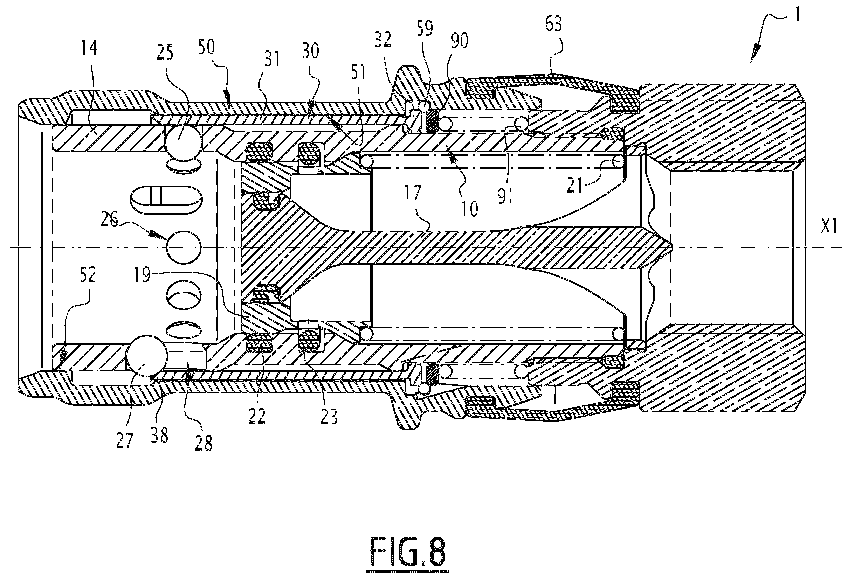

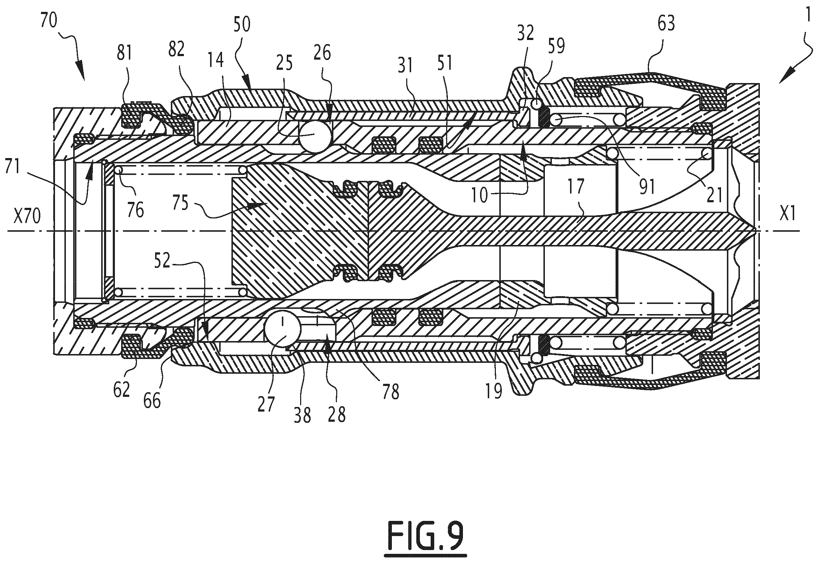

Les figures 8 et 9 montrent un ensemble de raccord fluidique selon un deuxième mode de réalisation, qui est identique à celui des figures 1 à 7, hormis qu'une bague d'appui 90 est interposée radialement entre la bague de manœuvre 50 et la bague de verrouillage 30. La bague d'appui 90 est maintenue en appui vers l'avant contre l'arrière du jonc 59 sous l'action d'un ressort 91, positionné entre la bague d'appui 90 et le corps arrière 12. Le ressort 91 remplace le ressort 39 qui est absent de ce mode de réalisation. Alors que le ressort 39 est un moyen de rappel pour rappeler directement la bague de verrouillage 30 vers la position de blocage, le ressort 91 assure une fonction de moyen de rappel indirect, qui rappelle la bague de verrouillage 30 vers la position de blocage en agissant par l'intermédiaire de la bague de manœuvre 50.

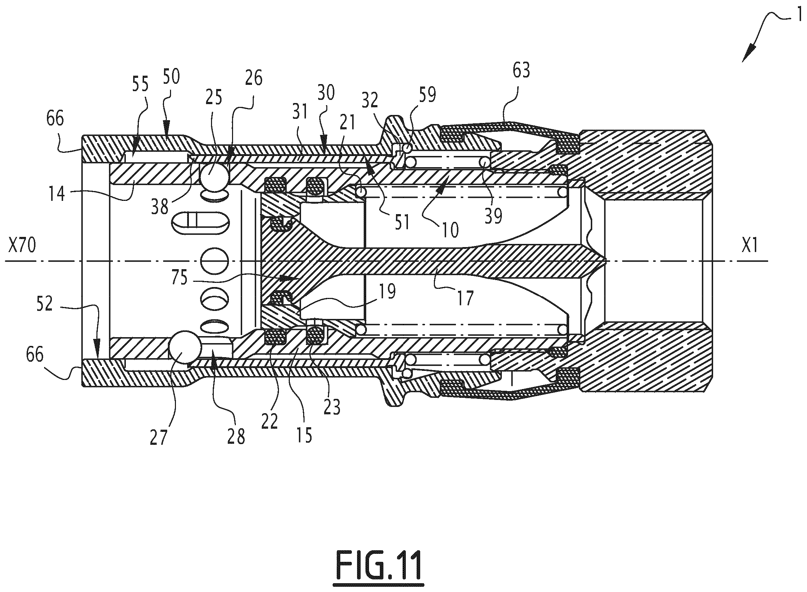

La figure 11 montre un ensemble de raccord fluidique selon un troisième mode de réalisation, qui est identique à celui des figures 1 à 7, hormis que la bague de verrouillage 30 et la bague de manœuvre 50 sont fixes l'une par rapport à l'autre. Pour cela, la bague de verrouillage 30 comprend un filetage extérieur 95, porté par la partie cylindrique avant 31, et la paroi interne médiane 51 de la bague de manoeuvre 50 porte un taraudage correspondant. La bague 30 est vissée dans la bague 50 par vissage du filetage extérieur 95 dans le taraudage, de sorte que la bague 50 est toujours en appui vers l'arrière contre le talon 32 de la bague 30. Dans ce mode de réalisation, la bague 50 reste apte à entraîner la bague 30 vers l'arrière via le talon 32, en étant en appui permanent contre le talon 32. Dans ce mode de réalisation la bague d'appui 90 et le jonc 59 ne sont pas nécessaires. En l'absence de bague 90 et de jonc 59, les dimensions de la gorge arrière 56 peuvent être réduites, ou la gorge arrière 56 peut être supprimée.

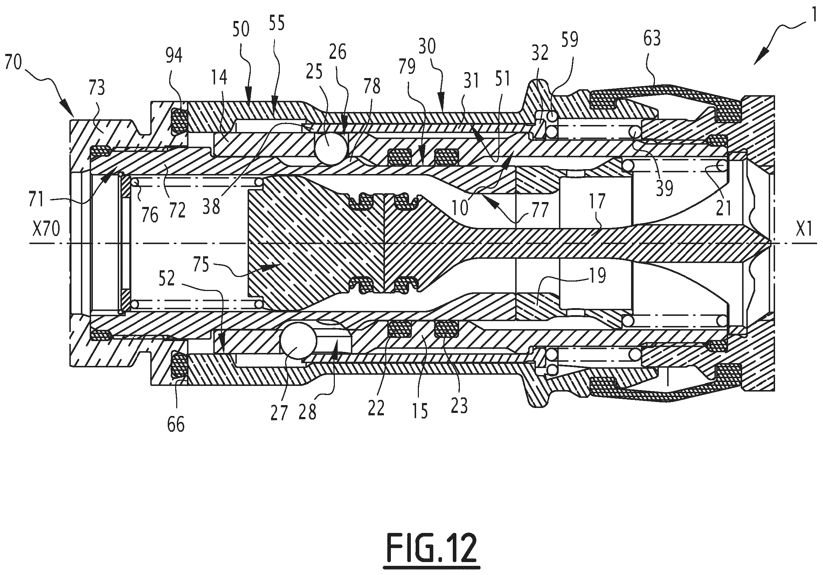

Les figures 11 et 12 montrent un ensemble de raccord fluidique selon un quatrième mode de réalisation, qui est identique à celui des figures 1 à 7, hormis que le corps 71 de l'élément complémentaire 70 comprend, à la place de la gorge radiale externe du corps arrière 73 logeant le joint 81, une gorge ouverte vers l'avant et logeant un joint annulaire 94. La bague de manoeuvre 50 ne dispose plus de la paroi extrémale avant 62, mais la partie avant 66, constituant l'extrémité avant de la bague 50, constitue ici une face avant perpendiculaire à l'axe X1, qui vient en contact axial avant avec le joint 94. La partie avant 66 est ici adjacente à la paroi radiale 52, puisque la paroi 62 qui les séparait est absente.

Pour ce mode de réalisation, le fait que les bagues 50 et 30 soient mobiles l'une par rapport à l'autre reste avantageux, puisque cela permet à l'ensemble de raccord accouplé de garantir le contact entre le joint 94 et la bague 50 pour maintenir l'étanchéité entre les deux éléments 1 et 70 au niveau du joint 94, par adaptation de la position de la bague 50 par rapport à la bague 30 afin de s'adapter à la géométrie de l'élément complémentaire 70.

Toute caractéristique décrite ci-avant pour l'un des modes de réalisation est applicable aux autres modes de réalisation, pour autant que techniquement possible.

## Revendications

1. Elément de raccord fluidique (1), configuré pour être accouplé avec un élément de raccord fluidique complémentaire (70), l'élément de raccord fluidique (1) comprenant :
- un corps (10), coaxial avec un axe central (X1) et dans lequel est emmanché l'élément de raccord fluidique complémentaire (70) au cours de l'accouplement ;
- au moins une bille de verrouillage (25), mobile par rapport au corps (10), radialement par rapport à l'axe central (X1), entre :
• une position de verrouillage, dans laquelle ladite au moins une bille de verrouillage (25) est apte à verrouiller l'élément de raccord fluidique complémentaire (70) emmanché dans le corps (10), et
• une position de déverrouillage, dans laquelle ladite au moins une bille de verrouillage (25) ne s'oppose pas au retrait de l'élément de raccord fluidique complémentaire (70) ;
- une bague de verrouillage (30), mobile par rapport au corps (10) suivant l'axe central (X1) entre :
• une position de blocage, dans laquelle ladite au moins une bille de verrouillage (25) est bloquée dans la position de verrouillage,
• une position de libération, dans laquelle ladite au moins une bille de verrouillage (25) est libre d'être déplacée jusqu'à la position de déverrouillage ;
- au moins une bille d'actionnement (27), reçue dans un logement allongé (28) du corps (10) et configurée pour être repoussée par l'élément de raccord fluidique complémentaire (70) le long du logement allongé (28), au cours de l'accouplement avec l'élément de raccord fluidique complémentaire (70), de sorte à entraîner axialement la bague de verrouillage (30) depuis la position de blocage jusqu'à la position de libération, le diamètre de ladite au moins une bille d'actionnement (27) étant supérieur au diamètre de ladite au moins une bille de verrouillage (25), ladite au moins une bille d'actionnement (27) dépassant radialement à l'extérieur d'une partie annulaire avant (14) appartenant au corps (10) ;
- des moyens de rappel (39 ; 91), pour rappeler la bague de verrouillage (30) vers la position de blocage ;
**caractérisé en ce que** :
- l'élément de raccord comprend une bague de manoeuvre (50), mobile par rapport au corps (10) suivant l'axe central (X1), montée autour de la bague de verrouillage (30) et comprenant une paroi radiale interne (52), radialement en regard de la partie annulaire avant (14) du corps (10) à l'avant du logement allongé (28), et dont le diamètre est inférieur au diamètre d'un cylindre (C52) coaxial avec l'axe central (X1) et comprenant ladite au moins une bille d'actionnement (27) ; et
- la bague de verrouillage (30) comprend un talon radial (32), pour être entrainée de la position de blocage vers la position de libération par la bague de manœuvre (50).

2. Elément de raccord fluidique (1) selon la revendication 1, dans lequel la bague de manœuvre (50) comprend :
- une paroi interne médiane (51), recevant la bague de verrouillage (30) et située en arrière de la paroi radiale interne (52), et
- une paroi interne arrière (53), s'étendant le long de l'axe central (X1) entre la paroi interne médiane (51) et une extrémité arrière (54) de la bague de manœuvre (50) et dont le diamètre est strictement supérieur au diamètre extérieur du talon radial (32).

3. Elément de raccord fluidique (1) selon la revendication 2, dans lequel la bague de manœuvre (50) comprend une gorge interne cylindrique (55), agencée à l'avant de la paroi interne médiane (51), de diamètre supérieur au diamètre de la paroi radiale interne (52) et adaptée pour recevoir ladite au moins une bille d'actionnement (27) lorsque la bague de verrouillage (30) est dans la position de libération.

4. Elément de raccord fluidique (1) selon l'une quelconque des revendications précédentes, dans lequel le diamètre externe de la partie annulaire avant (14) est sensiblement égal au diamètre de la paroi radiale interne (52) de la bague de manœuvre (50).

5. Elément de raccord fluidique (1) selon l'une quelconque des revendications précédentes, dans lequel les moyens de rappel (39) comprennent un ressort, qui prend appui sur le talon radial (32) et sur le corps (10) et qui rappelle la bague de verrouillage (30) vers la position de blocage.

6. Elément de raccord fluidique (1) selon l'une quelconque des revendications précédentes, dans lequel la bague de manœuvre (50) et la bague de verrouillage (30) comprennent des moyens de butée (59) par l'intermédiaire desquels la bague de manœuvre (50) est entraînée vers l'arrière lorsque la bague de verrouillage (30) est déplacée de la position de blocage vers la position de libération.

7. Elément de raccord fluidique (1) selon la revendication 6, dans lequel :
- la bague de manœuvre (50) comprend une gorge interne arrière (56) ; et
- les moyens de butée comprennent un jonc (59), intercalé entre un bord arrière (69) du talon radial (32) et un bord arrière (61) de la gorge interne arrière (56).

8. Elément de raccord fluidique (1) selon l' une quelconque des revendications précédentes, dans lequel la bague de manœuvre (50) est mobile axialement par rapport à la bague de verrouillage (30), entre :
- une position extrême avant, dans laquelle une partie avant (66) de la bague de manœuvre (50) dépasse du corps (10) vers l'avant, d'une première longueur de dépassement (L50A) et dans laquelle un moyen de rappel (63) entraîne la bague de manœuvre (50) vers la position extrême avant ; et
- une position avancée, en arrière par rapport à la position extrême avant, dans laquelle la bague de manœuvre (50) prend appui contre le talon radial (32) de la bague de verrouillage (30) et dans laquelle la partie avant (66) de la bague de manœuvre (50) dépasse du corps (10) vers l'avant, d'une deuxième longueur de dépassement (L50B) inférieure à la première longueur de dépassement (L50A).

9. Elément de raccord fluidique (1) selon l'une quelconque des revendications précédentes, dans lequel la bague de verrouillage (30) comprend une partie cylindrique avant (31), de diamètre interne égal au diamètre externe de la partie annulaire avant (14) du corps (10), et au moyen de laquelle la bague de verrouillage (30) prend appui radialement sur une portée avant (35) appartenant au corps (10) et sur une portée arrière (36) appartenant au corps (10), dans la position de blocage et dans la position de libération.

10. Elément de raccord fluidique (1) selon la revendication 9, dans lequel la portée avant (35) et la portée arrière (36) sont distantes axialement d'une longueur supérieure au tiers, de préférence supérieure à la moitié du diamètre interne de la partie cylindrique avant (31).

11. Elément de raccord fluidique (1) selon l'une quelconque des revendications 9 ou 10, dans lequel :
- la bague de verrouillage (30) comprend une face avant (38) ; et
- au cours de l'accouplement, ladite au moins une bille d'actionnement (27) appuie sur la face avant (38) pour entraîner axialement la bague de verrouillage (30) jusqu'à la position de libération.

12. Elément de raccord fluidique (1) selon l'une quelconque des revendications précédentes, dans lequel, en configuration désaccouplée, la bague de verrouillage (30) est en butée vers l'avant contre ladite au moins une bille d'actionnement (27).

13. Elément de raccord fluidique (1) selon l'une quelconque des revendications 1 à 7 ou 9 à 12, dans lequel la bague de manœuvre (50) et la bague de verrouillage (30) sont vissées l'une dans l'autre.

14. Ensemble de raccord fluidique, comprenant :
- l'élément de raccord fluidique (1) selon l 'une quelconque des revendications précédentes ; et
- l'élément de raccord fluidique complémentaire (70).

15. Ensemble de raccord fluidique selon la revendication 14, dans lequel :
- l'élément de raccord fluidique complémentaire (70) comprend un joint (81) formant un bourrelet annulaire (82) ; et
- la bague de manœuvre (50) comprend une paroi extrémale avant (62), qui est conique et divergente vers l'avant, la paroi extrémale avant (62) étant configurée pour entrer en contact avec le bourrelet annulaire (82), lorsque l'élément de raccord fluidique (1) est accouplé avec l'élément de raccord fluidique complémentaire (70), avec ladite au moins une bille de verrouillage (25) en position de verrouillage.
